# EUROPEAN PATENT SPECIFICATION

(11) **EP 2 918 169 B1**
(45) Date of publication and mention of the grant of the patent: **20.05.2020**
(21) Application number: 15159039.5
(22) Date of filing: 13.03.2015
(51) Int. Cl.: A01L 13/00

(54) **TRIMMING DEVICE AND METHOD FOR TRIMMING HOOVES OF ANIMALS**
TRIMMVORRICHTUNG UND VERFAHREN ZUM TRIMMEN DER HUFEN VON TIEREN
DISPOSITIF ET PROCÉDÉ DE PARAGE DE SABOTS D'ANIMAUX

(30) Priority: 13.03.2014 NL 2012422
(43) Date of publication of application: 16.09.2015
(73) Proprietor: Achtien, Pieter, 8403 BC Jonkerslan (NL)
(72) Inventor: Achtien, Pieter, 8403 BC Jonkerslan (NL)
(74) Representative: Verdijck, Gerardus

(56) References cited:
- EP-A1- 2 656 730
- WO-A1-82/03153
- DE-A1-102012 006 465

## Description

The present invention relates to a trimming device for trimming hooves of animals such as cows or horses.

Units known in practice for trimming hooves comprise a carrier or platform on which a frame of steel is arranged. One or more hoisting mechanisms in the form of tackles and hooks are then provided which are used to lift up one of the legs of the animal for trimming. Such units are usually transported by the farrier to the location where the animal for trimming is situated. The known units are embodied in steel in order to be able to absorb the forces which occur and which are caused by the weight of the animal and by the forces exerted on the construction by the animal before, during and after trimming. This has the result that a relatively heavy construction is applied. Since such a heavy construction has to be moved frequently by the farrier, the whole trimming operation results in relatively heavy working conditions.

EP 2 656 730 A1 discloses a conventional trimming device comprising a platform, uprights, girders and means for supporting a leg of the animal for trimming.

The present invention has for its object to provide a trimming device with which an effective and worker-friendly use is possible and wherein the animals in question are cared for in proper manner.

The present invention provides for this purpose a trimming device according to claim 1 for trimming hooves of animals.

Providing a lightweight material for the platform, the uprights and/or the girders, and preferably substantially the whole frame of the trimming device, achieves that the weight of the trimming device can remain limited in relation to the embodiments known in practice. It is thus possible for instance, while retaining all functionality, to reduce the weight of the trimming device according to the invention to below 850 kg, preferably to below 800 kg and most preferably even to below 750 kg. This significantly improves working conditions for the farrier compared to conventional devices which are usually heavier than about 1200 kg.

The uprights are preferably provided wholly from the lightweight material and at least a substantial part of the platform is likewise provided from lightweight material. The device according to the invention particularly comprises preferably at least 50%, more preferably at least 75% and most preferably at least 95% lightweight material for the uprights and platform. Uprights and platform, optionally with the exception of connecting elements, are preferably provided wholly from lightweight material.

An additional advantage of the reduced weight are the lower transport costs and related environmental impact associated with the transport of relatively great weights. The care of hooves of animals hereby becomes more effective because it can be performed less expensively. Emissions resulting from transport are also reduced.

A further advantage of the reduced weight, particularly in respect of legislation in the Netherlands relating to a weight below 750 kg, is that such a device for transporting can and may be transported with a normal passenger car. This therefore avoids use having to be made of a truck or transit van. This further reduces the costs associated with the care of hooves of animals wherein the trimming device according to the invention is used, as well as the emission of exhaust gases and the associated environmental impact. This is particularly relevant since for instance dairy cattle have to be trimmed every 4 to 5 months, this necessitating a relatively large number of transport movements. With the present conventional heavy units use is usually made of a three-axle trailer. In addition to fuel costs and environmental impact, a relatively heavy weight also affects overall costs of the vehicle, including for instance wear to tires.

Substantially providing the trimming device according to the invention with a frame of a lightweight material comprising a number of profiled, preferably bent elements achieves that the loads occurring on the device can be absorbed in correct manner without damage being caused to the device. These loads are caused for instance by the weight of the animal for trimming and the forces exerted by this animal before, during and after care. The use of profiled elements ensures that these loads are transmitted in correct manner such that, among other problems, deformation of the device is prevented. In a currently preferred embodiment the profiled elements are bent sheet material.

In the advantageous preferred embodiment according to the present invention the lightweight material is aluminium.

An alternative to the use of aluminium is for instance the use of a plastic material. An additional advantage of the use of aluminium is that no specific finishing treatments are required, in particular a preserving process such as galvanizing and/or painting. This limits the costs of manufacturing the trimming device and in addition avoids the adverse environmental effects occurring as a result of these preservation processes required in conventional trimming devices.

According to the present invention at least some of the uprights are provided with a bent profile such that the platform is attachable thereto over a bent profile surface as seen in a horizontal direction. According to the present invention the bent profile of at least some of the uprights is provided such that a plane of attachment or line of attachment between upright and platform comprises several planes or directions.

Providing a bent profile for the upright achieves that the upright is not connected along one straight line or one single straight surface to the platform as in conventional units. In such a construction forces in a direction wholly or partially out of this surface would be absorbed poorly, whereby twisting, rotation and bending of the upright can occur relative to the platform. This brings about deformation of the construction of the device and possibly even causes damage thereto.

By making use of a bent profile forces which occur can be better absorbed while use can be made of a lightweight material for the frame. An upright of the frame is for this purpose preferably bent at least through one angle, whereby the plane of attachment or line of attachment between the upright and the platform comprises several planes/directions and as it were goes round the corner. Preferably providing several and even all uprights of the device with at least one such bent profile, and attaching it in a manner adapted thereto to the platform, achieves that forces which occur can be properly absorbed in all directions without causing damage to the device according to the invention. This increases the lifespan of the device according to the invention.

In a further advantageous preferred embodiment according to the present invention at least some of the girders arranged substantially in a longitudinal direction of the device are provided with a bent profile such that one or more of the uprights is attachable thereto over a bent profile surface as seen in a vertical direction.

As described above for the uprights in relation to the bent profile, forces which occur can be absorbed (even) better by applying girders based on a bent profile. This further avoids damage to the device as a result of occurring forces. A bent profile for the upright is preferably combined with a bent profile for the girder in order to enable even better absorption of forces and to enable further reduction of the overall weight of the trimming device by making possible the use of lightweight material or strengthening the device therewith.

In a further advantageous preferred embodiment according to the present invention the platform is provided with a substantially horizontal support surface comprising two side parts which are integrated therewith and extend over at least a part of a side edge of the support surface as seen in longitudinal direction of the platform.

Using side parts preferably integrated with the support surface a configuration for the platform according to the invention is realized which varies from a rectangular form. It is found that forces which occur can hereby be further absorbed. By providing the side parts integrally in the support surface forces are transmitted as well as possible and damage avoided. In a currently preferred embodiment the form of the side parts is adapted to the bent profile of at least some of the uprights of the frame. Side walls inclining to some extent as seen in the horizontal plane are preferably applied here such that the forces occurring can be absorbed as well as possible in diverse directions. An effective trimming device is hereby realized with which hooves of animals can be trimmed in effective manner using a relatively lightweight construction.

In a further advantageous preferred embodiment according to the present invention the device comprises a mounting for mounting thereon a wheel axle with wheels such that the device is transportable as trailer.

By providing an arrangeable wheel axle having wheels the trimming device can be applied as trailer. Particularly in combination with the relatively low weight, such a trailer can be transported using a passenger car. The platform of the device preferably functions here as base plate of the trailer. The weight of the trailer as a whole hereby remains limited and a separate trailer is no longer required for the purpose of transporting the trimming device. This significantly reduces the costs associated with trimming of hooves.

In a further advantageous preferred embodiment according to the present invention the device comprises height-adjustable foot supports.

Providing height-adjustable foot supports enables the device to be brought to a higher work height during use. The animal for trimming can for instance thus step easily onto the platform which is provided on or close to a ground surface, after which the platform is raised by bringing the adjustable foot supports to the desired height. A further advantage of the height-adjustable foot supports is that they can also be applied for the purpose of mounting the wheel axle and/or wheels thereon. This avoids for instance a tackle being required to lift the whole device. It is hereby possible to dispense with a separate hoisting device which the farrier must for instance take along on a trailer. Care can also be carried out in wholly self-supporting manner irrespective of installations at the location.

The foot supports are preferably height-adjustable over a range of 30-50 cm, and preferably about 40 cm. A desired work height can hereby be realized and/or a desired height can be reached for utilizing wheels and/or a wheel axle.

In a further advantageous preferred embodiment according to the present invention the device comprises a girth strap provided with a drive arm which is connected to the upright at an engagement point thereon lying between the outer ends of the upright.

Connecting the girth strap operatively to the upright, for instance halfway along the upright as seen in the height thereof, achieves that the forces which occur can be absorbed in relatively simple manner by the upright. In conventional devices the forces usually have to be absorbed from the top side of the device, whereby the device is loaded more heavily. In the trimming device the construction can, due to the location of the connection between girth strap and upright, take a lighter form such that a further weight-saving is realized, with the associated advantages.

The invention further relates to a method according to claim 10 for trimming hooves of an animal, comprising of:
- providing a trimming device as described above;
- positioning the animal for trimming in the device;
- trimming the animal; and
- allowing the trimmed animal out of the device.

Such a method provides the same effects and advantages as those stated with reference to the trimming device.

The method preferably makes particular use of providing a relevant work height through the use of the foot supports. Separate hoisting mechanisms or tackle mechanisms can preferably be dispensed with here, and/or working conditions further improved. Through the use of the lightweight device according to the invention a number of the above stated advantages are also gained in respect of working conditions, cost levels and environmental impact.

Further advantages, features and details of the invention are elucidated on the basis of preferred embodiments thereof, wherein reference is made to the accompanying drawings, in which:
- figure 1 shows a view of the trimming device according to the invention;
- figures 2 and 3 show views of the frame of the trimming device of figure 1; and
- figure 4 shows a view of an alternative trimming device according to the invention.

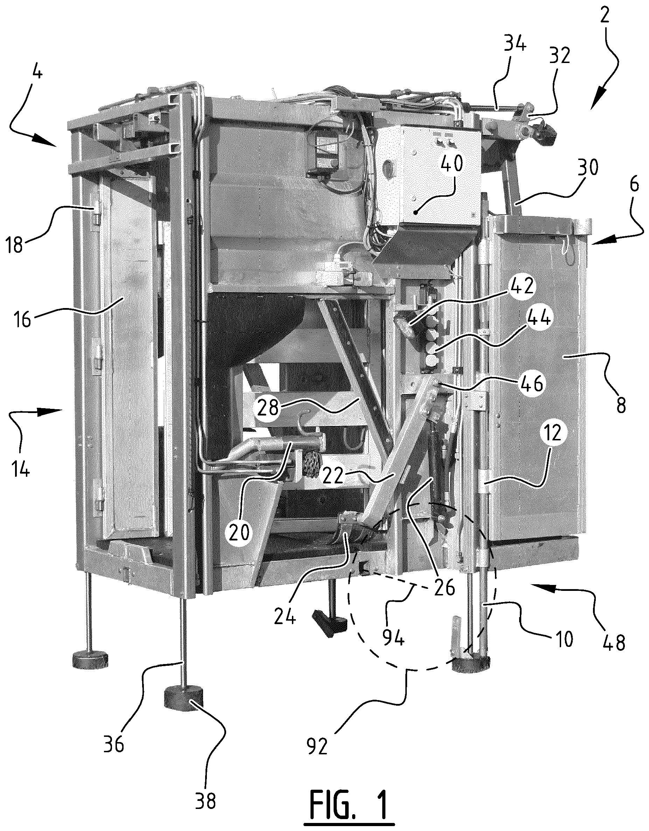

A trimming device 2 (figure 1) consists of a frame 4. Device 2 has an entry side 6 where a door element 8 is provided. Door element 8 can rotate around pivot rod 10 using hinges 12. Device 2 also has an exit side 14, wherein in the shown embodiment two door elements 16 are arranged using hinges 18.

Forelegs of the animal for trimming can be arranged on one of the brackets 20. Movable bracket 22 for girth strap 24 is arranged rotatably around shaft 46, in the shown embodiment about halfway along the height of trimming device 2. The movement of girth strap 24 is realized using drive cylinder 26, wherein the movement is guided and bounded by guide 28.

Trimming device 2 is further provided with control 40 for controlling the separate components. Lamp 42 is also provided for a better view of the hooves for trimming. Additional socket outlets or power supply connections 44 are provided to enable connection of additional equipment thereto.

Provided on the rear side of trimming device 2 is bracket 30 for the hind legs of the animal for trimming. Bracket 30 is movable using mechanism 32 which is driven by cylinder 34. Trimming device 2 is further provided with extending leg 36 with foot 38 with which device 2 can be brought to a desired work height. Extending of legs 36 can optionally take place with one or more cylinders 48.

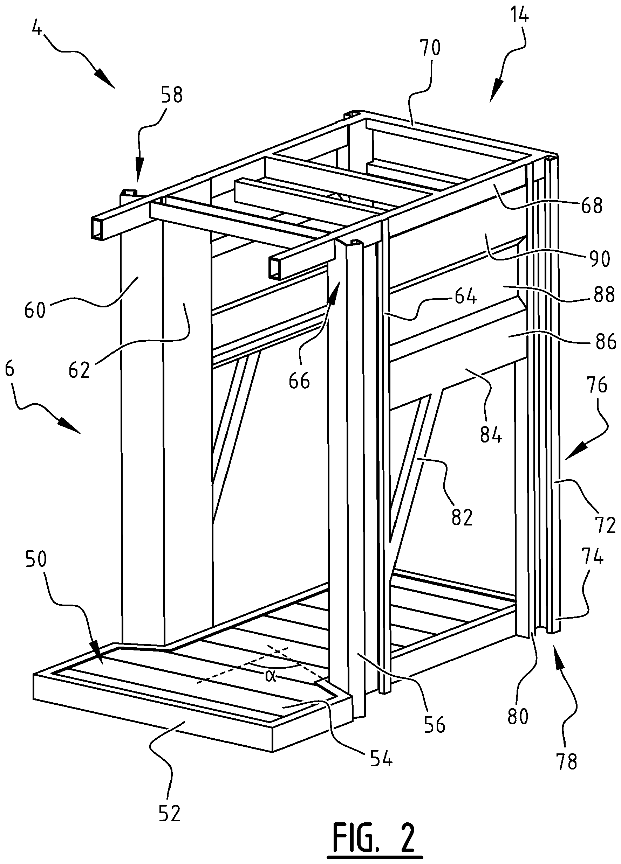

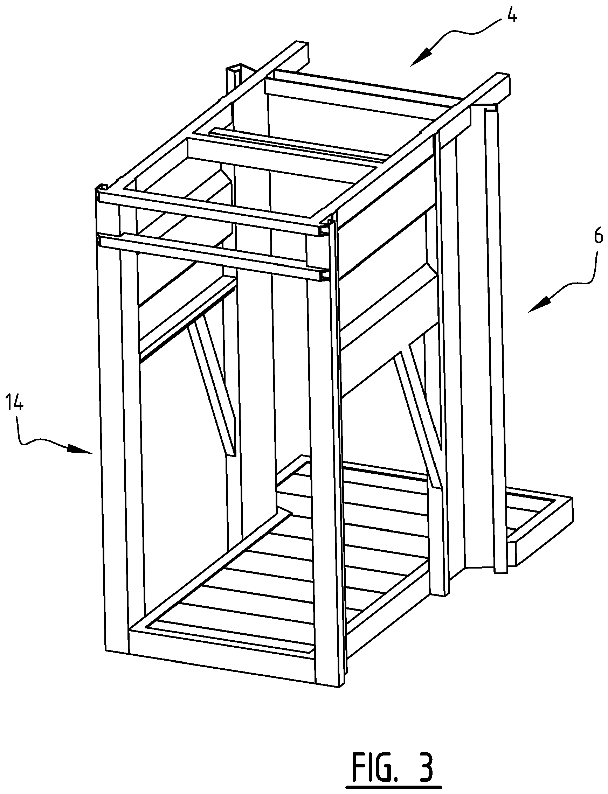

Floor 50 (figures 2 and 3) of trimming device 2 comprises peripheral edge 52 in which a number of plate parts 54 are arranged. Two uprights 56 are provided by means of welding on peripheral edge 52. Each of the uprights 56 is provided with a profile edge 58, side wall 60, longitudinal wall 62 and second profile edge 64. Provided on the upper side of upright 56 in the shown embodiment are recesses 66 in which a longitudinal beam 68 is placeable. Individual longitudinal beams 68 are mutually connected using one or more transverse beams 70. A frame 4 further comprises two additional uprights 72 which are provided with a profile edge 74, rear wall 76, longitudinal wall 78 and profile edge 80.

Side wall 60 and longitudinal wall 62 are provided at angle α in the shown embodiment. As a result the effective weld length between upright 56 and floor 50 is on the one hand lengthened considerably and the possibilities for absorbing forces which occur are on the other hand increased.

Upright 56 is connected using connection 82 to connecting plate 84. In the shown embodiment connecting plate 84 has a bent profile comprising a side 86, a side 88 arranged in recessed manner and a side 90 with transitions therebetween. Additional strength is hereby imparted to frame 4 at the position of uprights 56, 72. Forces are absorbed in diverse directions by the bent profile.

In the shown embodiment trimming device 2 is also provided with wheel 92 arranged on wheel axle 94. By retracting expandable legs 36 wheel 92 can rest on the ground surface and be coupled directly as trailer to a vehicle.

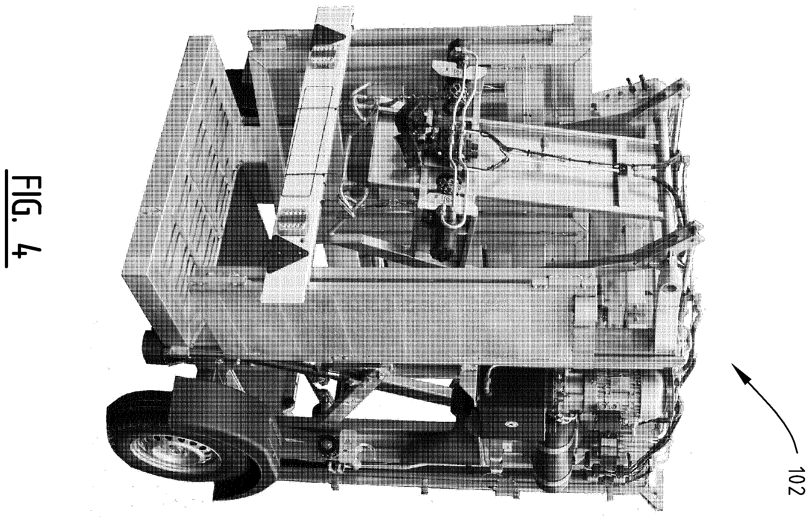

In a further embodiment trimming device 102 (figure 4) is provided as mobile device. This embodiment 102 comprises substantially the same components as device 2 shown in figure 1. A difference relates for instance to a somewhat modified rear side. Device 102 clearly shows a construction which is readily mobile without a separate trailer being required.

When an animal has to be trimmed, trimming device 2, 102 is transported in the shown embodiment as trailer to the desired location. Floor 50 serves here as base part for the trailer and trimming device 2 is provided with a single-axle trailer. Having arrived at the desired location, trimming device 2 is manoeuvred using wheels 92 to the desired position. Legs 36 are subsequently extended in order to remove wheels 92. Floor 50 is then positioned on the ground surface so that the animal for trimming can be placed in frame 4 of trimming device 2. After positioning of the animal inside trimming device 2, floor 50 can be brought to height by extending the legs 36. This considerably improves working conditions. After trimming of the forelegs using bracket 20 and the hind legs using bracket 22, floor 50 can be moved downward again so that the animal can be released from trimming device 2 and a subsequent animal can be trimmed.

As soon as all animals have been trimmed, wheels 92 are arranged on trimming device 2. Extending legs 36 are retracted and device 2 is manoeuvred in the direction of the vehicle with which device 2 is transported. Trimming device 2 can subsequently be transported as trailer to a subsequent desired location.

During the manufacture of trimming device 2 uprights 56 are arranged with a relatively long weld seam along side wall 60 and longitudinal wall 62 over the whole longitudinal direction thereof in contact with peripheral edge 52. The weld is applied here at an angle α. Profile edges 58, 64 are also provided. Upright 72 is also provided with a number of profile edges 74, 80. A further strengthening is realized by further connecting the uprights 56, 72 using profile plates 84 and an additional connection 82. Forces which occur can be absorbed in diverse directions in correct manner by employing the bent profiles. Rotation shaft 46, around which girth strap 24 can rotate, is preferably provided here at a relatively low height, for instance halfway along the length as seen in height direction of upright 72. The torque action of the forces acting thereon hereby remains limited.

Trimming device 2 is preferably provided in the shown embodiment from an aluminium sheet material. The use of other materials is also possible, as will be apparent to the skilled person.

The present invention is by no means limited to the above described preferred embodiments thereof. The rights sought are defined by the following claims, within the scope of which many modifications can be envisaged.

## Claims

1. Trimming device (2,102) for trimming hooves of animals, comprising:
- a platform (50) on which an animal for trimming can be positioned and which is provided with an entrance (6) and an exit (14);
- a number of uprights (56,72) connected to the platform;
- a number of girders (68,70) connected to at least some of the uprights; and
- at least one lifting mechanism (20,30,32) for lifting a leg of the animal for trimming,
**characterized in that** the material for at least a part of the platform, the uprights and the girders is a lightweight material comprising a number of profiled elements, wherein at least some of the uprights are provided with a bent profile such that the platform is attachable thereto over a bent profile surface as seen in a horizontal direction, wherein the bent profile of at least some of the uprights is provided such that a plane of attachment or line of attachment between upright and platform comprises several planes or directions.

2. Trimming device as claimed in claim 1, wherein the lightweight material is aluminium.

3. Trimming device as claimed in one or more of the foregoing claims, wherein at least some of the girders arranged substantially in a longitudinal direction of the device are provided with a bent profile such that one or more of the uprights is attachable thereto over a bent profile surface as seen in a vertical direction.

4. Trimming device as claimed in one or more of the foregoing claims, wherein the platform is provided with a substantially horizontal support surface comprising two side parts which are integrated therewith and extend over at least a part of a side edge in longitudinal direction of the platform.

5. Trimming device as claimed in one or more of the foregoing claims, further comprising a mounting for mounting thereon a wheel axle with wheels (92) such that the device is transportable as trailer.

6. Trimming device as claimed in claim 5, wherein the platform functions as base plate of the trailer.

7. Trimming device as claimed in one or more of the foregoing claims, further comprising height-adjustable foot supports (36, 38).

8. Trimming device as claimed in claim 7, wherein the foot supports are height-adjustable over a range of 30-50 cm, preferably about 40 cm.

9. Trimming device as claimed in one or more of the foregoing claims, further comprising a girth strap (24) provided with a drive arm (22) which is connected to an upright at an engagement point (46) lying between the outer ends of the upright.

10. Method for trimming hooves of an animal, comprising of:
- providing a trimming device (2,102) as claimed in one or more of the foregoing claims;
- positioning the animal for trimming in the device;
- trimming the animal; and
- allowing the trimmed animal out of the device.

## Patentansprüche

1. Trimmvorrichtung (2, 102) zum Trimmen von Hufen von Tieren, umfassend:
- eine Plattform (50), auf welcher ein Tier zum Trimmen positioniert werden kann, und welche mit einem Eingang (6) und einem Ausgang (14) versehen ist;
- eine Anzahl von Pfosten (56, 72), welche mit der Plattform verbunden sind;
- eine Anzahl von Trägern (68, 70), welche mit zumindest einigen von den Pfosten verbunden sind; und
- zumindest einen Hebemechanismus (20, 30, 32) zum Anheben eines Beins von dem Tier zum Trimmen,
**dadurch gekennzeichnet, dass** das Material für zumindest einen Teil von der Plattform, den Pfosten und den Trägern ein Material mit leichtem Gewicht ist, welches eine Anzahl von profilierten Elementen umfasst, wobei zumindest einige von den Pfosten mit einem gekrümmten Profil versehen sind, so dass die Plattform daran über eine gekrümmte Profiloberfläche, in der horizontalen Richtung gesehen, angebracht werden kann, wobei das gekrümmte Profil von zumindest einigen der Pfosten derartig vorgesehen ist, dass eine Verbindungsebene oder Verbindungslinie zwischen Pfosten und Plattform mehrere Ebenen oder Richtungen umfasst.

2. Trimmvorrichtung gemäß Anspruch 1, wobei das Material mit leichtem Gewicht Aluminium ist.

3. Trimmvorrichtung gemäß einem oder mehreren der vorhergehenden Ansprüche, wobei zumindest einige der Träger, welche im Wesentlichen in einer longitudinalen Richtung angeordnet sind, mit einem gekrümmten Profil versehen sind, so dass einer oder mehrere von den Pfosten über eine gekrümmte Profiloberfläche, gesehen in der vertikalen Richtung, daran angebracht werden kann.

4. Trimmvorrichtung gemäß einem oder mehreren der vorhergehenden Ansprüche, wobei die Plattform mit einer im Wesentlichen horizontalen Trägeroberfläche versehen ist, welche zwei Seitenteile umfasst, welche damit integriert sind und sich über zumindest einen Teil von einer Seitenkante in longitudinaler Richtung von der Plattform erstrecken.

5. Trimmvorrichtung gemäß einem oder mehreren der vorhergehenden Ansprüche, weiterhin eine Halterung umfassend zum Montieren einer Radachse mit Rädern (92) daran, so dass die Vorrichtung als Anhänger transportierbar ist.

6. Trimmvorrichtung gemäß Anspruch 5, wobei die Plattform als eine Basisplatte von dem Anhänger fungiert.

7. Trimmvorrichtung gemäß einem oder mehreren der vorhergehenden Ansprüche, weiterhin in der Höhe einstellbare Fußstützen (36, 38) umfassend.

8. Trimmvorrichtung gemäß Anspruch 7, wobei die Fußstützen in der Höhe über einen Bereich von 30 - 50 cm, vorzugsweise um 40 cm, einstellbar sind.

9. Trimmvorrichtung gemäß einem oder mehreren der vorhergehenden Ansprüche, weiterhin ein Gurtband (24) umfassend, welches mit einem Antriebsarm (22) versehen ist, welcher mit einem Pfosten an einem Eingriffspunkt (46) verbunden ist, welcher zwischen den äußeren Enden von dem Pfosten liegt.

10. Verfahren zum Trimmen von Hufen von einem Tier, umfassend:
- Vorsehen einer Trimmvorrichtung (2, 102) gemäß einem oder mehreren der vorhergehenden Ansprüche;
- Positionieren des Tiers zum Trimmen in der Vorrichtung;
- Trimmen des Tieres; und
- Herauslassen des Tieres aus der Vorrichtung.

## Revendications

1. Dispositif de parage (2, 102) destiné à parer des sabots d'animaux, comprenant :
une plate-forme (50) sur laquelle un animal destiné à être paré peut être placé et qui comporte une entrée (6) et une sortie (14) ;
un certain nombre de montants (56, 72) reliés à la plate-forme ;
un certain nombre de poutrelles (68, 70) reliées à au moins certains des montants ; et
au moins un mécanisme de levage (20, 30, 32) destiné à soulever une patte de l'animal afin d'assurer le parage,
**caractérisé en ce que** le matériau de la au moins une partie de la plate-forme, des montants et des poutrelles est un matériau léger comprenant un certain nombre d'éléments profilés, dans lequel au moins certains des montants comportent un profil courbe de telle sorte que la plate-forme peut être fixée sur ces derniers, sur une surface de profil courbe telle que vue suivant une direction horizontale, dans lequel le profil courbe d'au moins certains des montants est formé de telle sorte qu'un plan de fixation ou ligne de fixation entre le montant et la plate-forme comprend plusieurs plans ou directions.

2. Dispositif de parage selon la revendication 1, dans lequel le matériau léger est de l'aluminium.

3. Dispositif de parage selon une ou plusieurs des revendications précédentes, dans lequel au moins certaines des poutrelles agencées sensiblement dans une direction longitudinale du dispositif présentent un profil courbe de telle sorte qu'un ou plusieurs des montants peuvent être fixés sur celles-ci sur une surface de profil courbe telle que vue suivant une direction verticale.

4. Dispositif de parage selon une ou plusieurs des revendications précédentes, dans lequel la plate-forme comporte une surface de support sensiblement horizontale comprenant deux parties latérales qui sont intégrées à celle-ci et s'étendent sur au moins une partie d'un bord latéral dans la direction longitudinale de la plate-forme.

5. Dispositif de parage selon une ou plusieurs des revendications précédentes, comprenant, en outre, un bloc de montage sur lequel un essieu est monté avec des roues (92) de telle sorte que le dispositif peut être transporté comme une remorque.

6. Dispositif de parage selon la revendication 5, dans lequel la plate-forme fonctionne comme un plateau de la remorque.

7. Dispositif de parage selon une ou plusieurs des revendications précédentes, comprenant, en outre, des supports de pied réglables en hauteur (36, 38).

8. Dispositif de parage selon la revendication 7, dans lequel les supports de pied sont réglables en hauteur sur une plage de 30 à 50 cm, de préférence, de 40 cm environ.

9. Dispositif de parage selon une ou plusieurs des revendications précédentes, comprenant, en outre, une sangle ventrière (24) comportant un bras d'entraînement (22) qui est relié à un montant au niveau d'un point de couplage (46) situé entre les extrémités externes du montant.

10. Procédé de parage de sabots d'un animal, comprenant :
la préparation d'un dispositif de parage (2, 102) selon une ou plusieurs des revendications précédentes ;
le positionnement de l'animal afin d'assurer le parage dans le dispositif ;
le parage de l'animal ; et
la sortie de l'animal paré du dispositif.
